# EUROPÄISCHE PATENTSCHRIFT

(11) **EP 2 063 207 B1**
(45) Veröffentlichungstag und Bekanntmachung des Hinweises auf die Patenterteilung: **19.02.2014**
(21) Anmeldenummer: 08013299.6
(22) Anmeldetag: 24.07.2008
(51) Int. Cl.: F28D 7/10, F28F 13/06

(54) **Feuerungsanlage mit Wärmetauscher**
Combustion plat with heat exchanger
Installation de chaffage avec échangeur de chaleur

(30) Priorität: 10.10.2007 DE 102007048441
(43) Veröffentlichungstag der Anmeldung: 27.05.2009
(73) Patentinhaber: Bomat Heiztechnik GmbH, 88662 Überlingen (DE)
(72) Erfinder: Bommer, Rolf, 88662 Überlingen (DE)
(74) Vertreter: Daub, Thomas

(56) Entgegenhaltungen:
- EP-A1- 0 396 868
- EP-A1- 1 464 907
- DE-A1- 3 300 929
- DE-B1- 2 201 528
- DE-C1- 3 714 261
- US-A- 4 726 353
- US-A- 5 497 824
- US-B1- 6 354 248
- US-B1- 6 957 629

## Beschreibung

Die Erfindung betrifft eine Feuerungsanlage mit einem Wärmetauscher.

Aus der EP 0 288 695 B1, welche als nächstliegender Stand der Technik betractet werden kann, ist ein Wärmetauscher zur Wärmerück-gewinnung aus einem Wärmeträgermedium bei einer Heizungsanlage bekannt, wobei es sich bei dem Wärmeträgermedium um Abgas aus der Heizungsanlage handelt. Der Wärmetauscher wird mit dem Wärmeträgermedium, d.h. mit Abgas aus dem Heizkessel der Heizungsanlage, beaufschlagt. Zur Wärmerückgewinnung wird Wasser als Wärmeabtransportmittel in einer Leitung durch den gasdurchfluteten Wärmetauscher geführt.

Aus der DE 37 00 443 C2 ist ein Wärmetauscher für Heizkessel bekannt. Der Wärmetauscher weist einen vom Abgas des Heizkessels durchfluteten Behälter auf, der von einem Register von Rohren zur Durchleitung eines Wärmeabtransportmittels durchdrungen ist.

Aus der DE 33 25 200 C1 ist ein Wärmetauscher zur Wärmerückgewinnung bei einer Heizungsanlage bekannt. Die in einer Brennkammer der Heizungsanlage entstehenden Rauchgase strömen in einen Behälter des Wärmetauschers ein. Der von Rauchgas durchflutete Behälter wird von einem in einem Rohr geführten Wärmeabtransportmittel durchströmt.

Der Erfindung liegt insbesondere die Aufgabe zugrunde, einen Wärmetauscher zu schaffen, welcher einen großen Wärmeübertrag vom Wärmeträgermedium auf das Wärmeabtransportmittel ermöglicht.

Diese Aufgabe wird erfindungsgemäß durch die im Kennzeichen des Patentanspruchs 1 gegebenen Merkmale gelöst, wobei weitere Ausgestaltungen der Erfindung den Unteransprüchen entnommen werden können.

Erfindungsgemäß wird eine Feuerungsanlage mit einem Wärmetauscher zur Wärmerückgewinnung aus mindestens einem sich um Abgas handelnden Wärmeträgermedium, wobei die Wärmerückgewinnung aus thermischen Prozessen, bei Feuerungen aus festen, gasförmigen oder flüssigen Brennstoffen zur Nutzung von sensibler und latenter Wärme erfolgt, mit mindestens einem als rohrförmiger Hohlkörper ausgebildeten Strömungsbehältnis für das Wärmeträgermedium, welches einen Eintritt und einen Austritt für das Wärmeträgermedium besitzt, mit mindestens einem Leitbehälter zur Aufnahme eines sich um Wasser handelnden Wärmeabtransportmittels, der von dem mindestens einen Strömungsbehältnis für das Wärmeträgermedium durchdrungen oder umgeben ist, wobei der Leitbehälter an einem ersten Ende durch eine erste Dichtplatte und an einem zweiten Ende durch eine zweite Dichtplatte verschlossen ist und Rohrenden des Strömungsbehältnisses beweglich sowie flüssigkeitsdicht in den Dichtplatten verankert oder mit den Dichtplatten beweglich sowie flüssigkeitsdicht im Leitbehälter gelagert sind, und mit mindestens einem Mittel, welches durch Erhöhung der Strömungsgeschwindigkeit des Wärmeabtransportmittels in einem Bereich des Mediumeintritts einen im Vergleich zu einem Bereich des Mediumaustritts erhöhten Wärmeaustausch zwischen Wärmeträgermedium und Wärmeabtransportmittel bewirkt, vorgeschlagen. In der Regel treten beim Wärmetauscher im Bereich des Mediumeintritts höhere Temperaturen als im Bereich des Mediumaustritts auf. Vorteilhafterweise ist daher im Bereich des Mediumeintritts mindestens ein Mittel vorgesehen, welches bewirkt, dass mehr Wärme im Bereich des Mediumeintritts vom Wärmeträgermedium auf das Wärmeabtransportmittel ausgetauscht bzw. übertragen wird als im Bereich des Mediumaustritts.

Vorteilhafterweise ermöglichen hierbei konstruktiv einfache Geometrien bzw. Maßnahmen eine Erhöhung des Wärmeaustauschs zwischen Wärmeträgermedium und Wärmeabtransportmittel.

Grundsätzlich kann es sich bei dem mindestens einen Mittel um mindestens ein im Leitbehälter angeordnetes Leitblech handeln. Hierdurch kann gezielt die Durchflussgeschwindigkeit des Wärmeabtransportmittels gesteuert werden, wobei sowohl die Größe der Durchflussgeschwindigkeit als auch die Intensität bzw. Position des erhöhten Wärmeaustauschs bestimmbar sind.

Vorzugsweise handelt es sich bei dem mindestens einen Mittel um mindestens eine in einem Einlass zum Leitbehälter oder im Leitbehälter angeordnete Pumpe. Hierdurch sind sowohl Durchflussgeschwindigkeit als auch Durchflussmenge des Wärmeabtransportmittels im Leitbehälter genau steuerbar.

Des Weiteren wird vorgeschlagen, dass es sich bei dem mindestens einen Mittel um mindestens einen im Leitbehälter vorzugsweise im Bereich des Mediumeintritts angeordneten Turbolator handelt. Vorteilhafterweise ist dieser so ausgelegt, dass er die Durchflussmenge des Wärmetransportmittels so steuert, dass eine maximale Wärmeübertragung erzielt wird.

In einer weiteren Ausgestaltung der Erfindung wird vorgeschlagen, dass der Wärmetauscher mindestens eine im Strömungsbehältnis angeordnete Einrichtung zur Flächenvergrößerung bzw. zur Vergrößerung der Fläche für den Wärmeübergang aufweist. Vorteilhafterweise steigt durch die Flächenvergrößerung die Kontaktfläche zwischen Wärmeträgermedium und Strömungsbehältnis, wodurch der Wärmeübertrag vom Wärmeträgermedium auf das Strömungsbehältnis steigt. Hierdurch ist über das Strömungsbehältnis ebenfalls ein erhöhter Wärmeaustausch zwischen Wärmeträgermedium und Wärmeabtransportmittel möglich.

Ferner wird vorgeschlagen, dass es sich bei der mindestens einen Einrichtung um mindestens eine Rippe handelt, wodurch eine kostengünstige und einfach herzustellende Vergrößerung der Kontaktfläche möglich ist.

Außerdem wird vorgeschlagen, dass das Strömungsbehältnis mindestens teilweise aus einem nichtmetallischen Werkstoff besteht. Insbesondere sind metallfreie Oberflächen des Strömungsbehältnisses vorgesehen. Vorteilhafterweise ist ein aus nichtmetallischem Werkstoff hergestelltes Strömungsbehältnis gegen Korrosion und aggressive Medien, wie sie bei Abgasen entstehen, beständiger und dadurch langlebiger.

In einer weiteren Ausgestaltung der Feuerungsanlage ist eine Lagervorrichtung vorgesehen, welche zum mindestens teilweisen Schwenken des Wärmetauschers dient. Hierdurch wird eine flexible Einbaulage des Wärmetauschers erreicht, wodurch beispielsweise Montage-, Reparatur- und/oder Reinigungsarbeiten einfacher durchzuführen sind.

Vorteilhafterweise wird eine Wärmetauschereinrichtung mit mehreren Wärmetauschern vorgeschlagen. Diese können als Bausätze reihenweise angeordnet werden und dadurch den Wärmeaustausch vervielfachen.

Des Weiteren wird vorgeschlagen, dass die Wärmetauscher mindestens teilweise aus unterschiedlichen Materialien bestehen. Zusätzlich wird vorgeschlagen, dass die Wärmetauschereinrichtung mindestens teilweise mit unterschiedlichen Wärmetransportmitteln betreibbar ist. Hierdurch kann gezielt der Wärmeaustausch in einem Bereich der Wärmetauschereinrichtung gegenüber einem anderen Bereich der Wärmetauschereinrichtung erhöht werden. Ferner kann vermieden werden, dass zusätzliche, nicht im Brennstoff enthaltene und umweltschädigende Metallverbindungen, wie beispielsweise Fe, Cr, Ni, Mo, Al, Cu entstehen.

In einer weiteren Ausgestaltung der Wärmetauschereinrichtung wird eine Lagervorrichtung vorgeschlagen, welche zum mindestens teilweisen Schwenken der Wärmetauschereinrichtung dient, wodurch auch hier eine flexible Einbaumöglichkeit der Einrichtung erzielt wird.

Weitere Ausgestaltungen und Vorteile der Erfindung gehen aus den übrigen Unteransprüchen und der Beschreibung hervor.

Im Folgenden werden vier Ausführungsbeispiele der Erfindung anhand von vier Figuren näher erläutert. Die Figuren, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

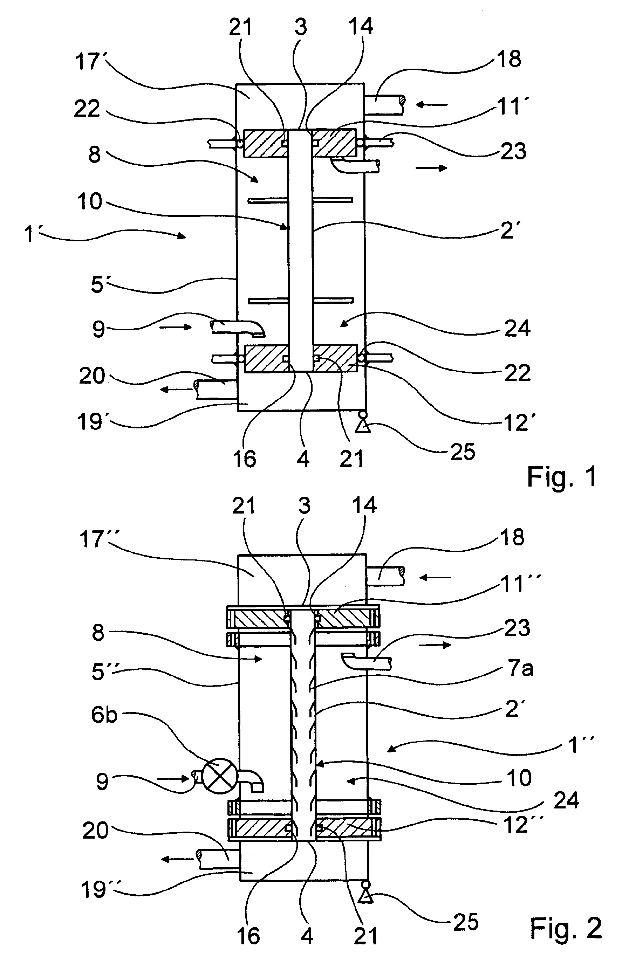

Die Fig. 1 bis 4 zeigen in vier Beispielen einen Wärmetauscher 1', 1", 1"', 1"" zur Wärmerückgewinnung aus mindestens einem Wärmeträgermedium in jeweils einem Längsschnitt, wobei die Figur 1 lediglich zur Erläuterung dient. Hierbei erfolgt die Wärmerückgewinnung aus thermischen Prozessen bei Feuerungen aus festen, gasförmigen oder flüssigen Brennstoffen, insbesondere zur Nutzung von sensibler und latenter Wärme, wobei auch weitere thermische Prozesse denkbar sind.

Der Wärmetauscher 1', 1", 1"', 1"" weist mindestens ein Strömungsbehältnis 2', 2'' für das Wärmeträgermedium mit mindestens einem Eintritt 3 und mindestens einem Austritt 4 für das Wärmeträgermedium auf. Ferner besitzt der Wärmetauscher 1', 1", 1''', 1"" mindestens einen Leitbehälter 5', 5", 5''' zur Aufnahme eines Wärmeabtransportmittels, der von dem mindestens einen Strömungsbehältnis 2', 2" für das Wärmeträgermedium durchdrungen oder umgeben ist. Der Leitbehälter 5', 5'', 5''' weist einen Einlass 9 und einen Auslass 23 für das Wärmeabtransportmittel auf.

In den vorliegenden Ausführungsbeispielen wird der Leitbehälter 5', 5", 5""' vom Strömungsbehältnis 2', 2" durchdrungen, d.h. das Wärmeträgermedium wird zum Wärmeaustausch durch das Wärmeabtransportmittel geführt, selbstverständlich ist dies auch umgekehrt denkbar, indem der Leitbehälter 5', 5'', 5''' vom Strömungsbehältnis 2', 2" umgeben ist und somit das Wärmeabtransportmittel durch das Wärmeträgermedium geführt wird. Im vorliegenden Fall handelt es sich beim Wärmeabtransportmittel um Wasser und beim Wärmeträgermedium um bei einem thermischen Prozess entstandenes Abgas, wobei es sich selbstverständlich beim Wärmeabtransportmittel und beim Wärmeträgermedium um jedes einem Fachmann als sinnvoll erscheinende Mittel oder Medium handeln kann.

Das Strömungsbehältnis 2', 2" ist vorzugsweise als rohrförmiger Hohlkörper ausgebildet und besteht vorzugsweise mindestens teilweise aus einem nichtmetallischen Werkstoff, wie beispielsweise Keramik. Insbesondere ist die dem Wärmeabtransportmittel bzw. Wasser zugewandte Fläche 10 des Strömungsbehältnisses 2', 2" metallfrei ausgebildet. Das Strömungsbehältnis 2', 2'' ist im Leitbehälter 5', 5", 5''' angeordnet bzw. durchdringt den Leitbehälter 5', 5'', 5'''. Der Leitbehälter 5', 5", 5''' ist vorzugsweise ebenfalls als rohrförmiger Hohlkörper ausgebildet, welcher an einem ersten Ende durch eine erste Dichtplatte 11', 11" und an einem zweiten Ende durch eine zweite Dichtplatte 12', 12'' verschlossen ist. Die Dichtplatten 11', 11'', 12', 12" dienen zur Aufnahme des rohrförmigen Strömungsbehältnisses 2' und 2'', indem ein erstes Rohrende des Strömungsbehältnisses 2', 2" in eine erste Aufnahme 14 der ersten Dichtplatte 11', 11" und ein zweites Rohrende in eine zweite Aufnahme 16 der zweiten Dichtplatte 12', 12" eingesteckt ist, wobei das erste Rohrende den Mediumeintritt 3 und das zweite Rohrende den Mediumaustritt 4 bildet. Die Rohrenden können fest oder beweglich bzw. drehbar sowie flüssigkeitsdicht in den Dichtplatten 11', 11'', 12', 12" verankert sein. Alternativ hierzu können die Rohrenden mit den Dichtplatten 11', 11", 12', 12" beweglich bzw. drehbar sowie flüssigkeitsdicht im Leitbehälter 5', 5", 5''' gelagert sein. Vorteilhafterweise bildet das Strömungsbehältnis 2', 2" hierdurch mit dem Leitbehälter 5', 5", 5''' einen spannungsfreien Wärmetauscher 1', 1'', 1"', 1"".

An die das erste Rohrende aufnehmende Dichtplatte 11', 11" schließt sich eine Mediumeintrittskammer 17', 17'' mit einer Zuleitung 18 für das Wärmeträgermedium und an die das zweite Rohrende aufnehmende Dichtplatte 12', 12'' schließt sich eine Mediumaustrittskammer 19', 19" mit einer Ableitung 20 für das Wärmeträgermedium an.

Im ersten Ausführungsbeispiel gemäß Fig. 1 sind Leitbehälter 5' sowie Mediumeintrittskammer 17' und Mediumaustrittskammer 19' einstückig ausgebildet, was bedeutet, dass die Dichtplatten 11', 12' innerhalb des einstückigen Leitbehälters 5' und voneinander beabstandet angeordnet sind. Die Dichtplatten 11', 11'', 12', 12" weisen an ihrem Umfang eine radiale Nut zur Aufnahme eines Dichtringes 21 auf. In einer Wand des Leitbehälters 5' ist eine radiale Nut zur Aufnahme eines Dichtringes 22 vorgesehen. Im zweiten Ausführungsbeispiel gemäß Fig. 2 und 3 sind die Dichtplatten 11", 12" separat ausgebildet und an den Leitbehälter 5" angeflanscht. Die Kammern 17'', 19" sind mit den Dichtplatten 11", 12" fest oder drehbar sowie korrosionsbeständig, gasdicht und/oder flüssigkeitsdicht verbunden.

Um einen Wärmetauscher 1', 1", 1"', 1"" zu schaffen, welcher einen größeren Wärmeübertrag vom Wärmeträgermedium auf das Wärmeabtransportmittel ermöglicht, ist erfindungsgemäß mindestens ein Mittel 6, 7 vorgesehen, welches in einem Bereich 8 des Mediumeintritts 3 im Vergleich zu einem Bereich 24 des Mediumaustritts 4 einen erhöhten Wärmeaustausch zwischen Wärmeträgermedium und Wärmeabtransportmittel bewirkt, wobei unter Bereich 8 des Mediumeintritts 3 der Bereich des Strömungsbehältnisses 2', 2" zu verstehen ist, welcher sich ausgehend von der ersten Dichtplatte 11', 11" in den Leitbehälter 5', 5", 5'" erstreckt, und unter Bereich 24 des Mediumaustritts 4 der Bereich des Strömungsbehältnisses 2', 2'' zu verstehen ist, welcher sich ausgehend von der zweiten Dichtplatte 12', 12'' in den Leitbehälter 5', 5", 5''' erstreckt.

Zum einen kann das mindestens eine Mittel 6 zur Erhöhung der Strömungsgeschwindigkeit des Wärmeabtransportmittels dienen und zum anderen handelt es sich bei dem mindestens einen Mittel 7 um mindestens eine im Strömungsbehältnis 2' angeordnete Einrichtung 7a zur Flächenvergrößerung.

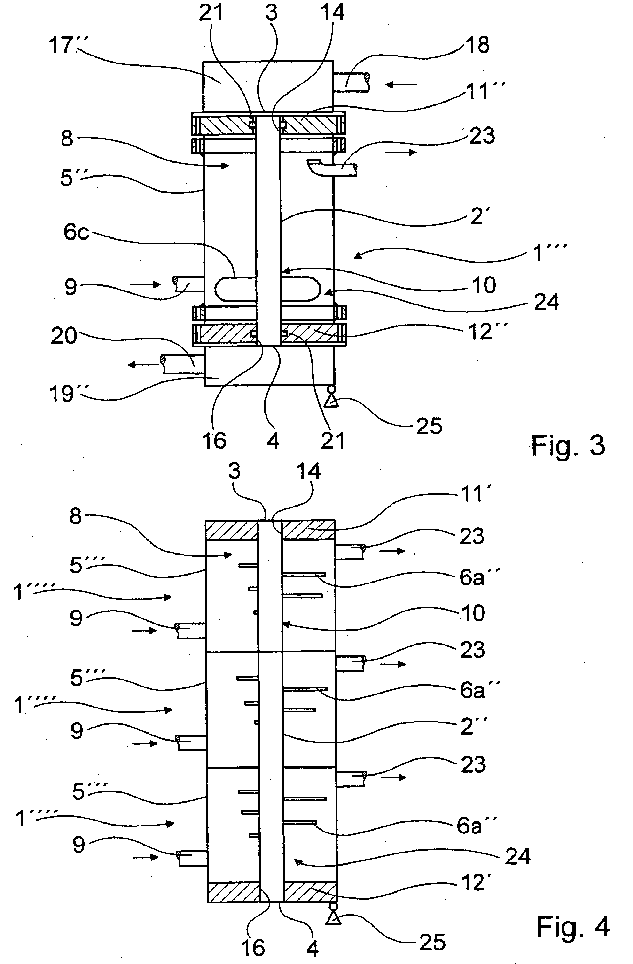

Dient das mindestens eine Mittel 6 zur Erhöhung der Strömungsgeschwindigkeit des Wärmeabtransportmittels, so kann es unterschiedlich ausgestaltet sein. Gemäß Fig. 4 handelt es sich bei dem mindestens einen Mittel 6 um mindestens ein im Leitbehälter 5''' angeordnetes Leitblech 6a", wobei im vorliegenden Fall zwei Leitbleche 6a" vorgesehen sind. Alternativ hierzu handelt es sich gemäß Fig. 2 bei dem mindestens einen Mittel 6 um mindestens eine in dem Einlass 9 des Leitbehälters 5" angeordnete Pumpe 6b, wobei selbstverständlich auch mehrere Pumpen vorgesehen sein können. Gemäß Fig. 3 handelt es sich bei dem mindestens einen Mittel 6 um mindestens einen im Leitbehälter 5" angeordneten Turbolator 6c. Selbstverständlich können die Mittel 6 auch untereinander kombiniert werden.

Fig. 2 offenbart mehrere im Strömungsbehältnis 5" angeordnete Einrichtungen 7a zur Flächenvergrößerung in Form von im Strömungsbehältnis 5" angeordneten Rippen 7a.

Vorteilhafterweise kann gemäß Fig. 4 eine Wärmetauschereinrichtung vorgesehen sein, welche mehrere Wärmetauscher 1', 1", 1"', 1"" aufweisen kann. Vorteilhafterweise können die Wärmetauscher 1', 1", 1"', 1"" mindestens teilweise aus unterschiedlichen Materialien bestehen. Im Übrigen kann die Wärmetauschereinrichtung mindestens teilweise mit unterschiedlichen Wämeabtransportmitteln betreibbar sein, d.h. die Wärmetauscher 1', 1'', 1"', 1"" können mindestens teilweise mit unterschiedlichen Wämeabtransportmitteln beaufschlagt werden.

Zusätzlich kann sowohl bei den Wärmetauschern 1', 1'', 1''', 1'''' gemäß Figuren 1 bis 3 als auch bei der Wärmetauschereinrichtung gemäß Fig. 4 jeweils wenigstens eine Lagervorrichtung 25 vorgesehen sein, welche zum mindestens teilweisen Schwenken der Wärmetauscher 1', 1", 1"', 1"" bzw. der Wärmetauschereinrichtung dient. Vorzugsweise ermöglicht die Lagervorrichtung 25 einen Schwenkwinkel zwischen 0° und 180°, insbesondere einen Schwenkwinkel zwischen 10° und 85°.

### Bezugszeichen

- 1', 1", 1"', 1'''': Wärmetauscher
- 2', 2'': Strömungsbehältnis
- 3: Eintritt
- 4: Austritt
- 5', 5'', 5''': Leitbehälter
- 6: Mittel zur Erhöhung des Wärmeaustauschs (Erhöhung der Strömungsgeschwindigkeit)
- 6a": Leitblech
- 6b: Pumpe
- 6c: Turbolator
- 7: Mittel zur Erhöhung des Wärmeaustauschs (Flächenvergrößerung)
- 7a: Einrichtung zur Flächenvergrößerung
- 8: Bereich (Mediumeintritt)
- 9: Einlass
- 10: Fläche des Strömungsbehältnisses
- 11: 1. Dichtplatte
- 12: 2. Dichtplatte
- 14: 1. Aufnahme
- 16: 2. Aufnahme
- 17: Mediumeintrittskammer
- 18: Zuleitung
- 19: Mediumaustrittskammer
- 20: Ableitung
- 21: Dichtring
- 22: Dichtring
- 23: Auslass
- 24: Bereich (Mediumaustritt)
- 25: Lagervorrichtung

## Patentansprüche

1. Feuerungsanlage mit einem Wärmetauscher (1', 1", 1"', 1"") zur Wärmerückgewinnung aus mindestens einem sich um Abgas handelnden Wärmeträgermedium, wobei die Wärmerückgewinnung aus thermischen Prozessen, bei Feuerungen aus festen, gasförmigen oder flüssigen Brennstoffen zur Nutzung von sensibler und latenter Wärme erfolgt, mit mindestens einem als rohrförmiger Hohlkörper ausgebildeten Strömungsbehältnis (2', 2") für das Wärmeträgermedium, welches einen Eintritt (3) und einen Austritt (4) für das Wärmeträgermedium besitzt, mit mindestens einem Leitbehälter (5', 5", 5"') zur Aufnahme eines sich um Wasser handelnden Wärmeabtransportmittels, der von dem mindestens einen Strömungsbehältnis (2', 2") für das Wärmeträgermedium durchdrungen oder umgeben ist, wobei der Leitbehälter (5', 5", 5"') an einem ersten Ende durch eine erste Dichtplatte (11', 11") und an einem zweiten Ende durch eine zweite Dichtplatte (12', 12") verschlossen ist und Rohrenden des Strömungsbehältnisses (2', 2") beweglich sowie flüssigkeitsdicht in den Dichtplatten (11', 11", 12', 12") verankert oder mit den Dichtplatten (11', 11", 12', 12") beweglich sowie flüssigkeitsdicht im Leitbehälter (5', 5", 5"') gelagert sind, und mit mindestens einem Mittel (6), welches durch Erhöhung der Strömungsgeschwindigkeit des Wärmeabtransportmittels in einem Bereich (8) des Mediumeintritts (3) einen im Vergleich zu einem Bereich (24) des Mediumaustritts (4) erhöhten Wärmeaustausch zwischen Wärmeträgermedium und Wärmeabtransportmittel bewirkt.

2. Feuerungsanlage nach Anspruch 1,
**dadurch gekennzeichnet, dass**
es sich bei dem mindestens einen Mittel (6) um mindestens eine in einem Einlass (9) des Leitbehälters (5") oder im Leitbehälter (5") angeordnete Pumpe (6b) handelt.

3. Feuerungsanlage nach Anspruch 1,
**dadurch gekennzeichnet, dass**
es sich bei dem mindestens einen Mittel (6) um mindestens einen im Leitbehälter (5") angeordneten Turbolator (6c) handelt.

4. Feuerungsanlage nach Anspruch 1,
**gekennzeichnet durch**
mindestens eine im Strömungsbehältnis (2') angeordnete Einrichtung (7a) zur Flächenvergrößerung.

5. Feuerungsanlage nach Anspruch 4,
**dadurch gekennzeichnet, dass**
es sich bei der Einrichtung um mindestens eine Rippe (7a) handelt.

6. Feuerungsanlage nach einem der vorhergehenden Ansprüche,
**dadurch gekennzeichnet, dass**
das Strömungsbehältnis (2', 2") mindestens teilweise aus einem nichtmetallischen Werkstoff besteht.

7. Feuerungsanlage nach einem der vorhergehenden Ansprüche,
**gekennzeichnet durch**
eine Lagervorrichtung (25), welche zum mindestens teilweisen Schwenken des Wärmetauschers (1', 1", 1"', 1"") dient.

## Claims

1. Combustion plant with a heat exchanger (1', 1", 1"', 1"") for the recovery of heat from at least one heat carrier medium which is exhaust gas, heat recovery from thermal processes during combustion of solid, gaseous or liquid fuels being carried out for the utilization of sensible and latent heat, with at least one flow container (2', 2"), designed as a tubular hollow body for the heat carrier medium, which possesses an inlet (3) and an outlet (4) for the heat carrier medium, with at least one conveying container (5', 5", 5"') for receiving a heat discharge means which is water, said conveying container (5', 5", 5"') being penetrated or surrounded by at least one flow container (2', 2") for the heat carrier medium, wherein the conveying container (5', 5", 5"') is closed at a first end by a first sealing plate (11', 11") and at a second end by a second sealing plate (12', 12"), and pipe ends of the flow container (2', 2") are anchored moveably and in a liquid-tight manner in the sealing plates (11', 11", 12', 12") or are mounted in the conveying container (5', 5", 5"') with the sealing plates (11', 11", 12', 12") moveably and in a liquid-tight manner, and with at least one means (6) which, by increasing the flow velocity of the heat discharge means, brings about, in a region (8) of the medium inlet (3), a heat exchange that is increased in comparison with a region (24) of the medium outlet (4), between the heat carrier medium and the heat discharge means.

2. Combustion plant according to Claim 1, **characterized in that** the at least one means (6) is at least one pump (6b) arranged in an intake (9) of the conveying container (5") or in the conveying container (5").

3. Combustion plant according to Claim 1, **characterized in that** the at least one means (6) is at least one turbulator (6c) arranged in the conveying container (5").

4. Combustion plant according to Claim 1, **characterized by** at least one device (7a) which is arranged in the flow container (2') and is provided for surface-increasing.

5. Combustion plant according to Claim 4, **characterized in that** the device is at least one rib (7a).

6. Combustion plant according to one of the preceding claims, **characterized in that** the flow container (2', 2") consists at least partially of a non-metallic material.

7. Combustion plant according to one of the preceding claims, **characterized by** a bearing device (25) which serves for the at least partial pivoting of the heat exchanger (1', 1", 1"', 1"").

## Revendications

1. Installation de chauffage comprenant un échangeur de chaleur (1', 1", 1"', 1"") pour la récupération de chaleur à partir d'au moins un milieu caloporteur qui est un gaz brûlé, la récupération de chaleur des processus thermiques lors de la combustion de combustibles solides, gazeux ou liquides s'effectuant pour utiliser de la chaleur sensible et latente, comprenant au moins un contenant d'écoulement (2', 2") pour le milieu caloporteur, le contenant d'écoulement (2', 2 ") étant réalisé sous forme de corps creux tubulaire et possédant une entrée (3) et une sortie (4) pour le milieu caloporteur, comprenant au moins un récipient de conduit (5', 5", 5"') pour recevoir un milieu de décharge chaleur qui est de l'eau, lequel récipient de conduit (5', 5", 5"') est traversé ou entouré par l'au moins un contenant d'écoulement (2', 2") pour le milieu caloporteur, le récipient de conduit (5', 5", 5"') étant fermé à une première extrémité par une première plaque d'étanchéité (11', 11") et fermé à une deuxième extrémité par une deuxième plaque d'étanchéité (12', 12"), et des extrémités tubulaires du contenant d'écoulement (2', 2") étant ancrées de manière mobile et étanche aux liquides dans les plaques d'étanchéité (11', 11", 12', 12") ou étant montées dans le récipient de conduit (5', 5", 5"') de manière d'être mobiles avec les plaques d'étanchéité (11', 11", 12', 12") ainsi que de manière étanche aux liquides, et comprenant au moins un moyen (6) lequel provoque, par augmentation de la vitesse d'écoulement du milieu de décharge chaleur dans une région (8) de l'entrée de milieu (3), un échange accru de chaleur, entre le milieu caloporteur et le milieu de décharge chaleur, par comparaison avec une région (24) de la sortie de milieu (4).

2. Installation de chauffage selon la revendication 1,
**caractérisée en ce que**
l'au moins un moyen (6) est au moins une pompe (6b) disposée dans une entrée (9) du récipient de conduit (5") ou dans le récipient de conduit (5").

3. Installation de chauffage selon la revendication 1,
**caractérisée en ce que**
l'au moins un moyen (6) est au moins un turbulateur (6c) disposé dans le récipient de conduit (5").

4. Installation de chauffage selon la revendication 1,
**caractérisée par**
au moins un dispositif (7a) d'augmentation de surface, disposé dans le contenant d'écoulement (2').

5. Installation de chauffage selon la revendication 4,
**caractérisée en ce que**
le dispositif est au moins une ailette (7a).

6. Installation de chauffage selon l'une quelconque des revendications précédentes,
**caractérisée en ce que**
le contenant d'écoulement (2', 2") est constitué au moins partiellement d'un matériau non métallique.

7. Installation de chauffage selon l'une quelconque des revendications précédentes,
**caractérisée par**
un dispositif de support (25) qui sert à pivoter au moins partiellement l'échangeur de chaleur (1', 1",1"',1"").
